# EUROPÄISCHE PATENTSCHRIFT

(11) **EP 0 736 779 B1**
(45) Veröffentlichungstag und Bekanntmachung des Hinweises auf die Patenterteilung: **22.07.1998**
(21) Anmeldenummer: 96101028.7
(22) Anmeldetag: 25.01.1996
(51) Int. Cl.: G01S 17/93, G01S 17/88, G08G 1/16

(54) **Verfahren zum Vermeiden einer Kollision eines Kraftfahrzeuges**
Method of avoiding collisions between vehicles
Procédé de protection de véhicules contre des collisions

(30) Priorität: 05.04.1995 DE 19512644
(43) Veröffentlichungstag der Anmeldung: 09.10.1996
(73) Patentinhaber: Bayerische Motoren Werke Aktiengesellschaft, 80788 München (DE)
(72) Erfinder: Waffler, Andreas, D-85579 Neubiberg (DE); Schwaiger, Kurt, D-82110 Germering (DE); Weishaupt, Walter, D-81247 München (DE)
(74) Vertreter: Bullwein, Fritz

(56) Entgegenhaltungen:
- EP-A- 0 510 613
- EP-A- 0 626 589
- PATENT ABSTRACTS OF JAPAN vol. 017, no. 626 (P-1647), 18.November 1993 & JP-A-05 203739 (MAZDA MOTOR CORP), 10.August 1993,
- PATENT ABSTRACTS OF JAPAN vol. 017, no. 637 (P-1650), 25.November 1993 & JP-A-05 205199 (MAZDA MOTOR CORP), 13.August 1993,
- PATENT ABSTRACTS OF JAPAN vol. 016, no. 538 (M-1335), 9.November 1992 & JP-A-04 201641 (MITSUBISHI AUTOMOB ENG CO LTD;OTHERS: 01), 22.Juli 1992,

## Beschreibung

Die Erfindung bezieht sich auf ein Verfahren nach dem Oberbegriff des Patentanspruchs 1.

Ein derartiges Verfahren ist aus der EP 626 589 Al bekannt. Dort wird mit Hilfe eines Lenkwinkelgebers die Bewegungsbahn des Kraftfahrzeugs berechnet und Ziele, die außerhalb dieser Bewegungsbahn liegen, nicht verfolgt. Es werden im Kraftfahrzeug die Bewegung des Kraftfahrzeugs und dabei ggf. auftretende Hindernisse nachgebildet.

Der Erfindung liegt die Aufgabe zugrunde, ein Verfahren der eingangs genannten Art zu schaffen, mit dem es möglich ist, das Auftreten eines Hindernisses bei Kurvenfahrt schnell zu detektieren.

Die Erfindung löst diese Aufgabe durch die kennzeichnenden Merkmale des Patentanspruchs 1.

Bei der Erfindung wird die Sendefrequenz in Abhängigkeit von der Fahrtrichtung gewählt. Die Fahrtrichtung selbst wird, wie bei der EP 626 589 Al beschrieben, mit Hilfe eines Lenkwinkelgebers oder aber auch durch Auswertung der verschiedenen Raddrehzahlen bestimmt. Weitere Möglichkeiten bestehen beispielsweise bei Auswertung von Standort- und Fahrstreckeninformationen, wie sie beispielsweise mit Hilfe eines GPS-Empfängers in Verbindung mit einem Navigationssystem auf Straßenkartenbasis möglich sind. In allen Fällen ist vorausgesetzt, daß Informationen für die Bewegungsbahnen vorliegen. Durch die Erfindung wird es möglich, die Erfassungsstrategie für die den Abtaststrahlen zugeordneten Empfangskanäle des Empfängers bedarfsorientiert zu wählen. Bei einer Kurvenfahrt werden die Abtaststrahlen, die in die Kurvenrichtung zeigen, öfter ausgesandt als die kurvenabgewandten Abtaststrahlen. Tritt ein Hindernis in den Erfassungsbereich der Abstands-Meßeinrichtung ein, so ist der Eintritt an der Stelle, die am weitesten in die Kurvenrichtung weist, von einer wesentlich größeren Wahrscheinlichkeit als in dem Bereich, der durch den kurvenäußeren Abtaststrahlen erfaßt wird. Die unterschiedliche Sendefrequenz der Abtaststrahlen trägt der Wahrscheinlichkeit, mit der ein Hindernis im Abtastbereich der jeweiligen Abtaststrahlen auftritt, Rechnung.

Entsprechend diesen Wahrscheinlichkeitsüberlegungen kann die Sendefrequenz bei Geradeausfahrt des Kraftfahrzeugs für alle Abtaststrahlen gleichgewählt werden. Die Wahrscheinlichkeit, auf ein Hindernis zu treffen, ist für jeden Abtaststrahl gleich.

Ergänzend kann die Sendefrequenz der kurveninneren Abtaststrahlen zusätzlich in Abhängigkeit vom Kurvenradius gewählt werden und bei kleinem Kurvenradius höher als bei großem Kurvenradius sein. Je mehr die Kurvenfahrt einer Geradeausfahrt ähnelt, desto weniger ist die Wahrscheinlichkeit für die verschiedenen Abtaststrahlen unterschiedlich, auf ein Hindernis zu treffen und entsprechend weniger unterschiedlich wird die Sendefrequenz der Abtaststrahlen gewählt. Handelt es sich andererseits um eine Kurvenfahrt mit kleinem Radius, so ist die Wahrscheinlichkeit für den kurveninnersten Abtaststrahl, auf ein Hindernis zu treffen, besonders groß. Umso stärker wird die Abtastfrequenz dann gegenüber dem Fall einer Geradeausfahrt und auch gegenüber der Sendefrequenz der anderen Abtaststrahlen angehoben. Die Sendefrequenz der verschiedenen Abtaststrahlen kann sich über die verschiedenen Abtaststrahlen gleichmäßig oder aber auch in Stufen ändern.

Anhand der Zeichnung ist die Erfindung weiter erläutert.

Es zeigt
- Fig. 1: den prinzipiellen konstruktiven Aufbau einer Vorrichtung zur Realisierung des erfindungsgemäßen Verfahrens und
- Fig. 2: in Form eines Diagramms die unterschiedlichen Sendefrequenzen für die einzelnen Abtaststrahlen abhängig von der Kurvenform und dem Kurvenradius.

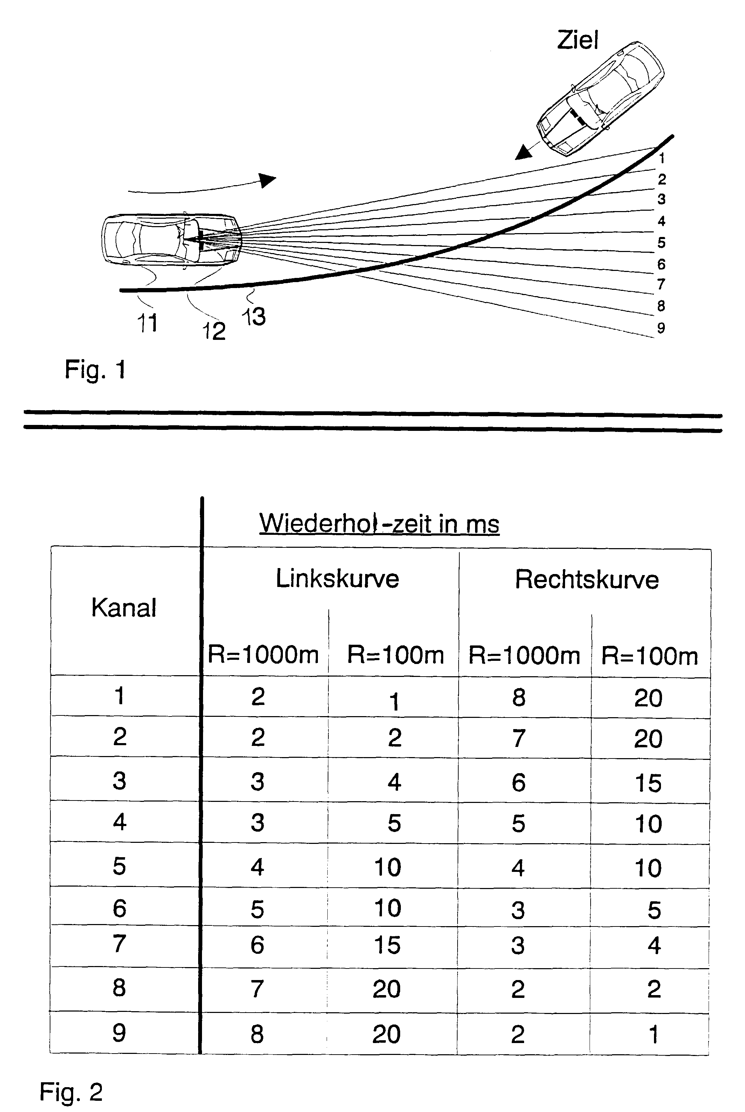

Der in Fig. 1 gezeigte prinzipielle Aufbau zeigt ein Kraftfahrzeug 11, in dem eine Abstands-Meßvorrichtung eine Reihe von hier neun Laser-Meßstrahlen fächerförmig etwa in einer Ebene aussendet. Die von Hindernissen rückgestreuten Laserimpulse werden mit einem Empfänger, der etwa am Ort des Senders 12 sitzt (nicht dargestellt) aufgenommen. Dieser Empfänger ist jedem der Abtaststrahlen zugeordnet und kann das reflektierte Signal jedes einzelnen Abtaststrahls hinsichtlich seiner Laufzeit und Intensität bestimmen. Es handelt sich somit um ein 9-Kanal-Meßsystem, das den Fahrkorridor lückenlos abdeckt. Der Fahrkorridor ist durch eine Straßenbegrenzung 13 schematisch dargestellt. Im vorliegenden Fall bewegt sich das Kraftfahrzeug in einer Linkskurve, deren rechter Rand eingezeichnet ist.

Die Sendefrequenz, mit der die neun Abtaststrahlen ausgesandt werden, hängt von der Orientierung der Abtaststrahlen im Bezug auf den Fahrkorridor bzw. den Fahrbahnverlauf ab. Sie hängt von der Wahrscheinlichkeit ab, mit der die Abtaststrahlen ein Hindernis erfassen. Dieser Zusammenhang ist in Fig. 2 beispielhaft erläutert.

Im Diagramm von Fig. 2 sind für den Fall einer Linkskurve und einer Rechtskurve für die Kanäle 1 bis 9 - die Zuordnung der Kanäle ergibt sich aus Fig. 1 - die Sendefrequenzen, d.h. die Wiederhol-Scanzeit (hier in ms) wiedergegeben. Dabei wird für beiden Kurvenformen auch noch der Radius berücksichtigt und beispielhaft ein Radius von 1000m bzw. von 100m angenommen. Die aufgeführten Zahlen bedeuten folgendes:

Es sei beispielsweise der Kanal 1 betrachtet. Bei einer Linkskurve mit einem Radius von 1000m ergibt sich ein Wiederholscanzeit von 2 ms., d.h. es werden 500 Abtaststrahlen pro Sekunde ausgesandt. Für den Kanal 9, d.h. den kurvenäußeren Abtaststrahl wiederum ergibt sich eine Wiederholscanzeit von 8 ms., d.h. es werden 125 Abtaststrahlen ausgesandt. Dabei ist die Sendezeit der Abtaststrahlen vernachlässigt.

Für einen kleineren Kurvenradius von 100m ergibt sich für den Kanal 1 eine Anzahl von 1000 Abtaststrahlen pro Sek., für den Kanal 9 lediglich 50 Abtaststrahlen pro Sek.

Bei einer Rechtskurve sind die Verhältnisse spiegelbildlich vertauscht. Kanal 1 wird jetzt wie Kanal 9 bei der Linkskurve abgetastet, Kanal 2 wie Kanal 8 usw.

Durch die niedrigere Wiederhol-Scanzeit bei Kurvenfahrten werden Ziele wahrscheinlicher erfaßt als bei konstanten Wiederholzeiten. Damit erfüllt sich die Echtzeitfähigkeit des Systems, d.h. es kann früher eine Warnung ausgelöst werden oder früher auf ein neues Ziel geregelt werden.

## Patentansprüche

1. Verfahren zum Vermeiden einer Kollision eines Kraftfahrzeugs mit einem Hindernis, bei dem das Ausgangssignal einer Abstands-Meßvorrichtung mit mehreren fächerförmig nach vorne ausgesandten Abtaststrahlen mit einem Empfänger und einer nachgeschalteten Auswerteeinheit aufgenommen wird, dadurch gekennzeichnet, daß die Sendefrequenz für kurveninnere Abtaststrahlen (1) höher als für kurvenäußere Abtaststrahlen (9) gewählt wird.

2. Verfahren nach Anspruch 1, dadurch gekennzeichnet, daß die Sendefrequenz bei Geradeausfahrt des Kraftfahrzeugs für alle Abtaststrahlen (1-9) gleich ist.

3. Verfahren nach Anspruch 1 oder 2, dadurch gekennzeichnet, daß die Sendefrequenz der kurveninneren Abtaststrahlen bei kleinem Kurvenradius höher als bei großem Kurvenradius ist.

## Claims

1. A method of avoiding a collision between a motor vehicle and an obstacle, wherein the output signal of a distance-measuring device transmitting a number of beams fanwise and forwards is received by a receiver and a downstream evaluation unit, **characterised in that** the transmission frequency for scanning beams (1) on the inside of a bend is made higher than for scanning beams (9) on the outside of a bend.

2. A method according to claim 1, **characterised in that** when the vehicle is travelling straight ahead the transmission frequency is the same for all scanning beams (1 - 9).

3. A method according to claim 1 or 2, **characterised in that** the transmission frequency for scanning beams on the inside of a bend is higher when the radius of the bend is small than when the radius is large.

## Revendications

1. Procédé permettant d'éviter une collision entre un véhicule et un obstacle, selon lequel le signal de sortie d'un dispositif de mesure de distance est assuré avec plusieurs faisceaux de détection émis vers l'avant suivant une répartition en éventail, pour être reçus par un récepteur suivi d'un circuit d'exploitation,
caractérisé en ce que
la fréquence d'émission des faisceaux de détection (1) à l'intérieur de la courbe est supérieure à celle des faisceaux de détection (9) à l'extérieur de la courbe.

2. Procédé selon la revendication 1,
caractérisé en ce que
la fréquence d'émission en cas de circulation rectiligne du véhicule est la même pour tous les faisceaux de détection (1-9).

3. Procédé selon la revendication 1 ou 2,
caractérisé en ce que
la fréquence d'émission des faisceaux de détection à l'intérieur de la courbe est plus élevée pour les petits rayons de courbure que pour les grands rayons de courbure.
